# EUROPEAN PATENT SPECIFICATION

(11) **EP 1 325 070 B1**
(45) Date of publication and mention of the grant of the patent: **26.11.2008**
(21) Application number: 01977867.9
(22) Date of filing: 01.10.2001
(51) Int. Cl.: C08K 5/435, B32B 27/12, D06N 3/12, C08K 5/103

(54) **IMPROVED THERMOPLASTIC HYDROPHILIC POLYMERIC COMPOSITIONS FOR MOISTURE VAPOUR PERMEABLE STRUCTURES**
VERBESSERTE THERMOPLASTISCHE HYDROPHILE POLYMER-ZUSAMMENSETZUNGEN FÜR FEUCHTIGKEITSDURCHLÄSSIGE STRUKTUREN
POLYMERES HYDROPHILES THERMOPLASTIQUES AMELIORES POUR STRUCTURES PERMEABLES A LA VAPEUR D'EAU

(30) Priority: 02.10.2000 EP 00121585
(43) Date of publication of application: 09.07.2003
(73) Proprietor: THE PROCTER & GAMBLE COMPANY, Cincinnati, Ohio 45202 (US)
(72) Inventor: CORZANI, Italo, I-66100 Chieti (IT); CORRAND, Didier, I-65013 Citta' Sant'Angelo (IT); MACBEATH, Calum, I-65010 Santa Teresa di Spoltore (IT)
(74) Representative: Hampton, Matthew John
(86) International application number: PCT/US2001/042413
(87) International publication number: WO 2002/028951

(56) References cited:
- EP-A- 0 963 760
- DE-A- 2 244 231
- DE-A- 19 706 380
- US-A- 3 898 171
- PATENT ABSTRACTS OF JAPAN vol. 018, no. 385 (C-1227), 20 July 1994 (1994-07-20) & JP 06 107843 A (UNITIKA LTD), 19 April 1994 (1994-04-19)

## Description

### Field of the Invention

The present invention relates to thermoplastic hydrophilic polymeric compositions for making a moisture vapour permeable, liquid impermeable structure, for example by forming the composition into a moisture vapour permeable, liquid impermeable layer such as a film. The compositions of the present invention can find a variety of applications wherein moisture vapour permeability is desirable.

### Background of the Invention

Thermoplastic films which provide a liquid barrier in addition to providing moisture vapour permeability are known in the art. Particularly preferred are hydrophilic continuous films that do not allow the flow of moisture vapour through open pores or apertures in the material, but do transfer substantial amounts of moisture vapour through the film by absorbing water on one side of the film where the moisture vapour concentration is higher, and desorbing or evaporating it on the opposite side of the film where the moisture vapour concentration is lower. Such films are typically formed from a thermoplastic polymeric composition comprising a thermoplastic hydrophilic polymer, or a blend of thermoplastic hydrophilic polymers. Thermoplastic hydrophilic polymeric compositions having the above described characteristics are also known in the art as "monolithic compositions", and the moisture vapour permeable, liquid impermeable layers or films made therefrom are known as "monolithic layers" or "monolithic films".

For example WO 95/16746 discloses films prepared from mixtures of a) block copolyether ester, block copolyether amides (e.g. Pebax^{™}) and or polyurethane and b) thermoplastic polymer which is incompatible with a, and c) a compatibiliser. The films are liquid impermeable and have moisture vapour permeability of about 700 g/m² day. Also, US 5,447,783 discloses a vapour permeable water resistant multi component film structure having at least three layers. The outer layers are hydrophobic copolyetherester elastomers having a thickness of 1.3-7.6 micrometers and a WVTR of 400-2500 g/m² 24h and the inner layer is a hydrophilic copolyetherester elastomer having a thickness of 7.6 - 152 micrometers and a WVTR of at least 3500 g/m² 24h.

US 5,445,875 discloses a waterproof, bloodproof and virusproof breathable laminate. The laminate comprises a woven/nonwoven fabric and an extruded film such as Hytrel^{™} having a thickness of about 1mil (25.4 micrometers).

US 5,532,053 discloses a high moisture transmission medical film which can be laminated onto a nonwoven material. The laminate film comprises a first layer of polyetherester copolymer and second and third layers selected from a specified group of polymers. The film has a MVTR of greater than 750 g/m² 24h (ASTM F1249) and a thickness of less than 1 mil (25.4 micrometer) preferably 0.6 mil to 0.75 mil (15 -19 micrometers).

US 4,938,752 discloses absorbent articles comprising films of copolyether esters which have reduced water permeability, a water vapour permeability of 500 g/m² 24h (as measured in a specified described test) and a thickness of 5-35 micrometers. There is no disclosure of a supportive substrate.

US 4,493,870 discloses a flexible layered waterproof product comprising a textile material covered with a film of a copolyetherester having an MVTR of at least 1000 g/m² 24h (ASTM E96- 66) having a thickness of 5 to 35 micrometers.

GB 2024100 discloses a flexible layered water resistant article comprising a microporous hydrophobic outer layer which is moisture vapour permeable but resist liquids and a hydrophilic inner layer of polyetherpolyurethane having a MVTR of above 1000 g/m² 24h.

In our patent applications WO 99/64077 entitled "Low viscosity thermoplastic compositions for moisture vapour permeable structures and the utilisation thereof in absorbent articles", and WO 99/64505 entitled "Low viscosity thermoplastic compositions for structures with enhanced moisture vapour permeability and the utilisation thereof in absorbent articles", thermoplastic hydrophilic polymeric compositions comprising a thermoplastic hydrophilic polymer, or a blend of thermoplastic hydrophilic polymers, are disclosed for making hydrophilic continuous moisture vapour permeable, liquid impermeable films or layers having preferred characteristics of moisture vapour permeability and liquid imperviousness. The disclosed preferred thermoplastic hydrophilic polymeric compositions are also readily processable so as to provide a coating having the desired thickness onto a substrate, so avoiding the need of complex traditional extrusion apparatuses. This is achieved by modifying the viscosity of the thermoplastic hydrophilic polymers by means of the inclusion in the composition of a suitable plasticiser or blend of plasticisers that lowers such viscosity. This allows to utilise with these preferred compositions typical process conditions known in the art for the direct coating of low viscosity hot melt compositions onto a substrate in order to form a moisture vapour permeable, liquid impervious film or layer.

Particularly preferred hydrophilic plasticisers are described in WO 99/64505, which, in addition to adjusting the viscosity of the compositions, also provide the thermoplastic hydrophilic polymeric compositions with a further benefit in terms of moisture vapour permeability.

As shown in the above cited prior art documents, a preferred use of known thermoplastic hydrophilic polymeric compositions ("monolithic compositions") for making moisture vapour permeable, liquid impermeable layers, is in the manufacture of moisture vapour permeable, liquid impermeable composite structures wherein one or more layers of the thermoplastic hydrophilic polymeric composition are connected to one or more different substrates, for example a fibrous layer such as a nonwoven fabric.

The connection between the different layers can be achieved with any known bonding means, for example by using an adhesive, or by means of heat and pressure, such as for example by heat bonding. These known methods are however not preferred since, for example, bonding by means of adhesive implies the addition of a further layer to the laminate structure, which may not be desirable in terms of cost, ease of manufacture, and of overall breathability of the resulting structure. Means involving heat and pressure on the other hand can be detrimental for the integrity of the layer formed from the thermoplastic hydrophilic polymeric composition, possibly modifying its moisture vapour permeability, and even more likely influencing the liquid impermeability, e.g. by forming discontinuities or even apertures in the layer.

Direct bonding of moisture vapour permeable, liquid impermeable layers formed from the thermoplastic hydrophilic polymeric compositions as described above to a suitable substrate, e.g. a nonwoven layer in order to form an e.g. composite layered structure, is therefore preferred. It is typically achieved by making use of the intrinsic tackiness of the thermoplastic polymeric composition when in molten or semi-molten or plastic state, for example by extruding a film made of the thermoplastic hydrophilic polymeric composition directly onto the substrate, or by hot-melt coating, that is by coating the substrate with a layer of the thermoplastic hydrophilic polymeric composition typically in a low viscosity molten state. Suitable methods, particularly for hot melt coating, are for example referred to in patent applications WO 99/64077 or WO 99/64.505, where thermoplastic hydrophilic polymeric compositions for moisture vapour permeable, liquid impermeable structures are disclosed, which have a low viscosity and are particularly suitable for hot melt coating processes.

Tackiness, and also possibly permanent tackiness in the solid state at room temperature, of thermoplastic hydrophilic polymeric compositions such as those disclosed in the above mentioned patent applications WO 99/64077 or WO 99/64505 can be also beneficial in the context of a film or layer formed form the said thermoplastic hydrophilic polymeric compositions and used as such, rather than in combination with at least a substrate in a composite structure.

However, hydrophilic polymers comprised in thermoplastic hydrophilic polymeric compositions ("monolithic compositions") for making moisture vapour permeable, liquid impermeable structures, typically have a polar character and do not have a good adhesion, when in plastic, semi-molten, and even when in completely molten state, onto many substrates, especially non polar substrates such as for example most nonwovens made of synthetic, non polar polymeric fibres, which are preferred in the manufacture of moisture vapour permeable, liquid impermeable composite structures comprising at least a monolithic layer or film combined with at least a suitable fibrous substrate. Such hydrophilic polymers also substantially lack any permanent tackiness in the solid state at room temperature.

Addition of suitable tackifying resins is generally known in the art in order to provide thermoplastic polymeric compositions, and particularly thermoplastic hydrophilic polymeric compositions, with a desired degree of adhesiveness or tackiness, for example in the molten, semi-molten or plastic state in order to improve direct bonding of the composition onto a substrate, such as a fibrous nonwoven substrate, e.g. in the manufacture of composite structures by direct formation and bonding of a film or layer of the thermoplastic hydrophilic polymeric composition onto the substrate as described above. Tackifying resins can also be added to impart permanent adhesiveness or tackiness to a thermoplastic polymeric composition in the solid state at room temperature.

A problem with the addition of known tackifying resins to thermoplastic hydrophilic polymeric compositions for moisture vapour permeable, liquid impermeable structures, is that while this addition is effective in imparting the desired degree of adhesiveness or tackiness to the composition, e.g. in the molten, semi-molten or plastic state, it can be also detrimental to the breathability of the layer or film formed from the composition itself. In other words, addition of known tackifying resins to the thermoplastic hydrophilic polymeric composition, particularly in the amounts typically required for the achievement of the desired tackifying level, dramatically decreases the capability of the "monolithic" layer or film formed from that composition of transmitting moisture vapour through its thickness.

Moreover, addition of a further component such as a tackifying resin or a blend of tackifying resins in any case adds complexity to the thermoplastic hydrophilic polymeric compositions for moisture vapour permeable, liquid impermeable films or layers or structures.
It is therefore an object of the present invention to provide thermoplastic hydrophilic polymeric compositions for moisture vapour permeable, liquid impermeable films, layers, or structures, which have the desired degree of adhesiveness or tackiness, e.g. in the molten, semi-molten, or plastic state, and preferably also in the solid state at room conditions, e.g. as permanent or semi-permanent tackiness, without the need of the further addition of a suitable tackifying resin, or blend of tackifying resins, while at the same time said thermoplastic hydrophilic polymeric compositions are readily processable and still have good or even better characteristics of moisture vapour permeability.

It has been surprisingly discovered that this can be achieved by suitably selecting, for said thermoplastic hydrophilic polymeric compositions, the thermoplastic hydrophilic polymer, or polymers, and a suitable plasticiser or blend of plasticisers.

It has been also discovered that compositions according to the present invention can be suitably tailored in order to show a semi-permanent tackiness and adhesiveness which is present after formation of the composition into e.g. a film or layer, and solidification thereof following the selected forming process, and which subsequently decreases with time. Alternatively, compositions according to the present invention can also show permanent tackiness and adhesiveness in the solid state at room temperature.

### SUMMARY OF THE INVENTION

The present invention relates to a thermoplastic hydrophilic polymeric composition for making a moisture vapour permeable, liquid impervious structure. The composition comprises:
a thermoplastic hydrophilic polymer selected from the group consisting of polyamides and co-polyamides, polyesters and copolyesters and their sulfonate derivatives, polyether-amides and polyether-amide block copolymers, polyester-amides and polyester-amide block copolymers, polyether-ester-amides and polyether-ester-amide block copolymers, polyether-ester block copolymers, and mixtures thereof, said thermoplastic hydrophilic polymer having hard and soft segments in the molecular chain, and wherein the thermoplastic hydrophilic polymer shows, at least in the solid state, and typically at room temperature, a multi-phase morphology with hard and soft domains, and
at least a suitable plasticiser which preferentially associates with the hard segments of the thermoplastic hydrophilic polymer, and which is capable of preferentially softening the hard domains and wherein:
   when said hard segments of said thermoplastic hydrophilic polymer have an amidic structure, said plasticiser is selected from the group consisting of sulphonamides, lactames, and polyamides with a number average molecular weight Mₙ not higher than 25,000 Daltons; and
   when said hard segments of said thermoplastic hydrophilic polymer have a polyester structure, said plasticiser is selected from the group consisting of sulphonamides, sulfones, and polyesters with a number average molecular weight Mₙ not higher than 25,000 Daltons;
wherein said thermoplastic hydrophilic polymeric composition does not comprise a tackifying resin and has a tackiness at 1 h of at least 0.3N/cm, preferably of at least 0.4 N/cm, more preferably of at least 0.6 N/cm, most preferably of at least 1.0 N/cm, said tackiness evaluated according to the FINAT Test Method No. 9 (FTM 9) referred to herein.

### DETAILED DESCRIPTION OF THE INVENTION

In the following description the term "adhesiveness" is intended to indicate the capability of a substance to bond other substances together by surface attachment, usually after application of pressure, and can be typically measured with a suitable Peel Strength test. The term "tackiness" indicates the property of a substance of being sticky or adhesive by simply contact, which can be typically measured as a loop tack, according to the FINAT Test Method No. 9 (FTM 9) referred to herein.

By saying "thermoplastic hydrophilic polymer" it is herein intended a thermoplastic polymer capable of forming a continuous film or layer that do not allow the flow of moisture vapour through open pores or apertures in the material, but do transfer substantial amounts of moisture vapour through the film by absorbing water on one side of the film where the moisture vapour concentration is higher, and desorbing or evaporating it on the opposite side of the film where the moisture vapour concentration is lower (monolithic films or layers, as explained herein). "Thermoplastic hydrophilic polymer" is therefore to be considered synonymous of "thermoplastic monolithic polymer" in the present description.

The terms "breathable" and "breathability" are intended herein to correspond to "moisture vapour permeable" or "water vapour permeable", and "moisture vapour permeability" or "water vapour permeability", referred to "monolithic compositions" and "monolithic layers or films" as defined in the Background of the Invention. "Moisture vapour" and "water vapour" are also considered to be equivalent.

According to the present invention, the thermoplastic polymeric hydrophilic compositions for making moisture vapour permeable, liquid impervious structures at least comprises a thermoplastic hydrophilic polymer or a mixture of thermoplastic hydrophilic polymers, and a suitable plasticiser, or a blend of suitable plasticisers.

As it is known in the art, a plasticiser is broadly defined as an organic compound added to a polymer both to facilitate processing and to increase the flexibility and toughness of the final product. As taught in our patent applications WO 99/64077 and WO 99/64505, a plasticiser or a blend of plasticisers can be included in a thermoplastic hydrophilic polymeric composition comprising a thermoplastic hydrophilic polymer or polymers in order to lower the viscosity of said thermoplastic hydrophilic polymer or polymers at the process conditions, which would be otherwise rather high. This facilitates the processability of these compositions, typically in order to provide a film or layer in a desired, and preferably low, thickness, onto a substrate, either a formation substrate, or a structural substrate for the formation of a composite layered structure. WO 99/64505 particularly discloses preferred plasticisers which, in addition to adjusting the viscosity of the compositions, are also capable of substantially keeping, and in some cases also increasing, the breathability of the pure thermoplastic hydrophilic polymer or polymers comprised in the compositions.

The present invention discloses thermoplastic hydrophilic polymeric compositions for making moisture vapour permeable, liquid impermeable films, layers or structures, in which a specific selection of the thermoplastic hydrophilic polymer or polymers, and of a suitable compatible plasticiser or blend or plasticisers, not only results in the same benefits in terms of ease of processability, and preferably also of breathability of the composition, similarly to what is disclosed in the above mentioned patent applications WO 99/64077 and WO 99/64505, but also provides the final composition with a desired level of tackiness, without the need of adding a tackifying resins.

The thermoplastic hydrophilic polymers according to the present invention comprise hard and soft segments in the molecular chain, and which show, at least in the solid state, and typically at room temperature, a multi-phase morphology with hard and soft domains. As it is known in polymer chemistry, these hard and soft domains, and corresponding hard and soft segments at a molecular scale, are typically identified by a glass transition temperature T_{g} which is respectively higher and lower than the room temperature. In particular, many multi-phase polymers according to the present invention show hard domains with a pronounced crystalline nature. Hard and soft segments can be present in a number of polymers, and typically in copolymers, and more specifically in block copolymers, where they substantially correspond to the hard and soft blocks of the copolymer structure.

According to the present invention, the thermoplastic hydrophilic polymers having hard and soft segments in the molecular chain are selected from the group consisting of polyamides and co-polyamides, polyesters and copolyesters and their sulfonated derivatives, polyether-ester block copolymers, polyether-amides and polyether-amide block copolymers, polyester-amides and polyester-amide block copolymers, polyether-ester-amides and polyether-ester-amide block copolymers, and mixtures thereof.

Preferred are polymers selected from the group consisting of copolyesters, polyester-amide block copolymers, polyether block copolymers, polyether-amide block copolymers, polyether-ester-amide block copolymers and polyether-ester block copolymers, and mixtures thereof.

Particularly preferred thermoplastic hydrophilic polymers having hard and soft segments in the molecular chain are thermoplastic poly-ether-amide block copolymers (e.g. Pebax^{™}), thermoplastic polyester block copolymers (e.g. Hytrel^{™}), or mixtures thereof.

According to the present invention, a suitable plasticiser, or a blend of suitable plasticisers, to be comprised in the thermoplastic hydrophilic polymeric composition, must be selected among those plasticisers which preferentially associate with the hard segments of the polymeric chain of the thermoplastic hydrophilic polymer or polymers, and which preferably are capable of preferentially softening, i.e. plasticising, the hard domains of the thermoplastic hydrophilic polymer, or polymers, selected as disclosed above.

Suitable plasticisers can be selected among substances having in the molecule groups or moieties with a particular chemical affinity to the hard domains of the thermoplastic hydrophilic polymer, in order to perform a preferential plasticisation towards the hard domains.

Suitable plasticisers can be selected among substances which are chemically similar to the composition of the hard segments of the molecular chain of the thermoplastic hydrophilic polymer. A typical example can be the monomers which form these hard segments. In order to maximize their effectiveness as plasticisers, these "chemically similar" substances are preferably monomeric or oligomeric. In case they have a polymeric structure, such as for example polyamides or polyesters, their number average molecular weight Mₙ is not higher than 25,000 Daltons.

When the hard segments of the thermoplastic hydrophilic polymer have an amidic structure, the plasticisers according to the present invention are sulphonamides, lactames, polyamides with a number average molecular weight Mₙ not higher than 25,000 Daltons.

When the hard segments of the thermoplastic hydrophilic polymer have a polyester structure the plasticisers are sulphonamides, sulfones, polyesters with a number average molecular weight Mₙ not higher than 25,000 Daltons.

Without being bound to any theory, it is believed that in the compositions of the present invention the plasticisers having a preferential plasticising activity towards the hard domains of the thermoplastic hydrophilic polymer or polymers are capable of modifying the rheologic behaviour of said compositions, particularly in terms of lowering the elastic modulus G', such that said compositions perform like an adhesive into the molten, semi-molten, or plastic state, and also can achieve a certain desired level of tackiness in the solid state after formation, typically at room temperature, which can be measured according to the FINAT Test Method No. 9 (FTM 9) referred to hereinbelow. This is obtained without the need of adding tackifying resins.

According to the present invention, the thermoplastic hydrophilic polymeric compositions comprising a thermoplastic hydrophilic polymer or polymers and a suitable compatible plasticiser or plasticisers, both polymer(s) and plasticiser(s) selected as explained above, show a tackiness at 1 hour, i.e., measured according to the FINAT Test Method No. 9 (FTM 9) referred to hereinbelow after one hour of the formation of the sample, of at least 0.3 N/cm, preferably of at least 0.4 N/cm, more preferably of at least 0.6 N/cm, most preferably of at least 1.0 N/cm. The tackiness evaluated according to the FINAT Test Method No. 9 (FTM 9) actually measures the capability of a thin film made of the composition of the present invention of bonding a specific substrate upon simple contact, substantially without any applied pressure. The measurements are performed one hour after formation of the sample, once the solid state, and if necessary, depending on the selected formation process, an equilibrium temperature have been attained. The preferred values of tackiness are achieved by thermoplastic hydrophilic polymeric compositions according to the present invention without the addition of tackifying resins, but are only provided by the selected plasticiser or plasticisers in combination with the selected thermoplastic hydrophilic polymer or polymers.

The thermoplastic hydrophilic polymeric compositions of the present invention can be also formulated in order to show a tackiness which can be permanent, similarly to what is achieved with pressure-sensitive adhesives, or semi-permanent, i.e., which is present in the composition soon after formation, but which subsequently decreases with time, possibly substantially disappearing after a certain time.

This is a clear advantage in some selected applications of the thermoplastic hydrophilic polymeric compositions of the present invention. For example, this allows the formation of very strong adhesion with a substrate when the composition is directly formed onto said substrate, i.e. by extrusion or hot melt coating, in order to form a stable laminated structure, wherein the tackiness at room conditions disappears after a sufficient time, when it is not needed any longer.

Semi-permanent tackiness in the solid state at room temperature can be also beneficial in films or layers made from the thermoplastic hydrophilic polymeric compositions of the present invention, both when they are made and used as such, or in laminated composite structures comprising the film or layer bonded to a substrate, e.g. a fibrous substrate. Said semi-permanent tackiness can be in fact useful in order to provide the film or layer with an additional element, e.g. a further layer, or with a material in loose form, e.g. loose fibres, or a particulate, or a powder, intended for a specific scope, by direct application after formation of the film or layer. For example, materials selected from those known in the art, typically in particle or powder form, which are capable of controlling odours, or of absorbing fluids, or of releasing an active agent such as e.g. a perfume, or pharmaceutical or cosmetic actives, can be applied and directly adhered to the film or layer after formation thereof by simply distributing them onto its surface, tacking advantage of the semi-permanent tackiness. Inert materials such as talcum powder can also be used, for example if it is desired to further, or more rapidly reduce the tackiness.

Said materials in particle or powder form are effectively bonded to the surface of the film or layer, owing to the semi-permanent tackiness of the composition of the present invention, which in turn partially or totally disappears after a certain time, for example facilitating further processing or use of the resulting structure.

Said semi-permanent tackiness also allows that some materials in particle or powder form are to a certain extent "consolidated" into the thickness of the film or layer, therefore increasing the bond therebetween, and also improving the appearance and the feel of the surface of the film or layers comprising the material.

Odour control materials include known agents for odour absorption, prevention, or masking.

Moisture absorbent materials include known super absorbent materials of the type used in disposable absorbent articles such as disposable diapers and sanitary napkins.

Active agent release materials include known materials capable of releasing e.g. perfumes, pharmaceutical or cosmetic actives, insecticides, therapeutic materials, pigments, dyes or colorants, preferably achieving a slow and gradual release over time. An example of known active agent release materials are encapsulated perfumes.

The semi-permanent tackiness can be evaluated by comparing the tackiness values of a sample which are measured with the FINAT Test Method No. 9 (FTM 9) respectively after one hour from the formation of the sample, and after twenty four hours. Compositions according to the present invention having this semi-permanent tackiness show a tackiness at 24 h, which means measured on the sample after twenty four hours of its formation, which is less than 30%, preferably less than 10%, of the tackiness at 1 h, i.e. measured on the sample after one hour of its formation. Typically the tackiness at twenty four hours is less than 0.1 N/cm, preferably less than 0.05 N/cm.

Without being bound to any theory, it is believed that in the thermoplastic hydrophilic polymeric compositions of the present invention showing this semi-permanent tackiness the plasticisers capable of preferentially softening the hard domains of the thermoplastic hydrophilic polymer increase the time required, after solidification of the composition, for the spontaneous recrystallisation of the hard domains of the polymer softened by the plasticiser, which instead, in the absence of the plasticisers of the present invention, would occur very rapidly after solidification of the composition. This in turn extends the time during which the composition is still tacky. In selected compositions according to the present invention this recrystallisation can be on the contrary indefinitely prevented, therefore providing the composition with permanent tackiness.

According to the present invention a moisture vapour permeable, liquid impervious layer can be formed from the thermoplastic hydrophilic polymeric compositions of the present invention, for example by laying said thermoplastic hydrophilic polymeric composition onto a substrate. The compositions of the present invention, wherein the thermoplastic hydrophilic polymer or polymers, and the suitable compatible plasticiser or plasticisers have been selected as described above, provide films or layers which are liquid impermeable and also have a good level of moisture vapour permeability (breathability), similar to that of films or layers having the same thickness and made of compositions comprising only the same pure thermoplastic hydrophilic polymer or polymers, or the same percentage of alternative suitable compatible plasticiser or plasticisers, such as those disclosed in our patent application WO 99/64505. Particularly preferred compositions according to the present invention can also provide films or layers having higher levels of breathability when compared to films or layers of the same thickness and comprising the same pure polymer or polymers or a same percentage of an alternative plasticiser or plasticisers as those disclosed in WO 99/64505.

The films or layers formed from the thermoplastic compositions of the present invention preferably have a moisture vapour transmission rate of at least 300 g/m² 24h, more preferably of at least 500 g/m² 24h, even more preferably of at least 600 g/m² 24h, most preferably of at least 1000 g/m² 24h, with a thickness of said layer or film of at least20 µm, said water vapour transmission rate measured according to the modified ASTM E-96 "Upright Cup" Method.

According to the present invention, films or layers can be formed from the thermoplastic hydrophilic polymeric compositions described so far which have a thickness of from about 0.5 µm to about 200 µm and above, said films or layers being usable as such, or in combination with different substrates, such as for example in a layered structure comprising a nonwoven fibrous substrate.

More in general, the thickness of the structures formed from the thermoplastic hydrophilic polymeric compositions of the present invention can be constant or vary within the structure. Though not limited to any specific thickness range, depending upon application there may be preferred ranges. For example, the preferred range for a structure comprised in a disposable article may desirously range from as thick as 400 microns down to less than 5 microns and more preferably, in certain cases, substantially less than5 microns. In contrast, a construction or even packaging application may, for certain reasons, dictate a preferred range from 200 to 2000 microns or even thicker for the structure.

According to the present invention, the suitable compatible plasticiser or plasticisers selected as described above in combination with the thermoplastic hydrophilic polymer or polymers, in addition to providing the final thermoplastic hydrophilic polymeric composition with a desired level of tackiness, without the need of adding a tackifying resin, are also particularly effective in increasing the processability of the thermoplastic hydrophilic polymeric compositions of the present invention, by adjusting the viscosity of said compositions in the molten state at the process conditions, in a similar way as already disclosed in our patent applications WO 99/64077 or WO 99/64505.

The thermoplastic hydrophilic polymers or mixture of thermoplastic hydrophilic polymers as mentioned above, comprised in the thermoplastic hydrophilic polymeric composition of the present invention, can be in fact typically highly viscous in the molten state at the process conditions that are typical of some preferred known processes of film or layer formation, e.g. an extrusion process involving a high power screw extruder. For example they may have a viscosity higher than 5000 poise at a temperature of 20°C above the DSC (Differential Scanning Calorimetry) melting point, which is the temperature identified as that corresponding to the DSC peak, or corresponding to the highest DSC peak in case of a mixture of polymers showing more than one peak, and at a frequency of 1 rad/sec.

According to the present invention, and similarly to what is disclosed in our patent applications WO 99/64077 or WO 99/64505, the viscosity of the thermoplastic polymeric hydrophilic compositions of the present invention is also preferably adjusted in the molten state at the process conditions by including in the thermoplastic hydrophilic polymeric composition the selected suitable compatible plasticiser, or blend of plasticisers.

Viscosity of the thermoplastic hydrophilic polymeric compositions of the present invention can therefore also be adjusted by the selected plasticiser or plasticisers, depending on how the composition is to be processed. For example film extrusion techniques can be suitably used with compositions having higher viscosity at the process conditions, as it is known in the art. Alternatively, suitable hot melt coating processes can be preferred to process the compositions, as explained in the above mentioned patent applications WO 99/64077 and WO 99/64505. This implies that the viscosity in the thermoplastic hydrophilic polymeric composition at the process conditions has to be adjusted at a suitable lower level.

In such a case, the thermoplastic polymeric hydrophilic compositions of this alternative embodiment of the present invention comprise a suitable compatible plasticiser or blend of plasticisers such that they preferably have the following complex viscosities (η*):

50 poise < η* < 4000 poise, preferably 100 poise < η* < 2000 poise, more preferably 100 poise < η* < 1000 poise, at a frequency of 1 rad/s at a temperature of 210°C or less and η* < 2000 pose, preferably η* < 1000 poise, more preferably η* < 500 poise, at a frequency of 1000 rad/s at a process temperature (T) of 210°C or less, wherein η* represents the complex viscosity of the thermoplastic polymeric hydrophilic composition. Preferably the temperature T is 200°C or less and more preferably 180°C or less and most preferably from 200°C to 50°C.

According to this preferred embodiment of the present invention the thermoplastic hydrophilic polymeric compositions having the complex viscosity described above allow for a film or layer to be coated onto a substrate using typical coating conditions and apparatuses known in the art for the coating of low viscosities hot melt compositions in a layer having a required thickness onto a substrate, while also keeping the advantageous characteristics of the preferred thermoplastic hydrophilic polymers in providing hydrophilic continuous moisture vapour permeable, liquid impermeable layers or films.

Thermoplastic hydrophilic polymeric compositions having such viscosities can also provide very thin films or layers.

In addition to the selected compatible plasticiser or plasticisers of the present invention, further plasticiser or plasticisers can be also optionally added to the thermoplastic hydrophilic polymeric compositions of the present invention, for example selected among those disclosed in our patent applications WO 99/64077 or WO 99/64505, for further adjustment of the viscosity of the composition in the molten state at the process conditions and/or for further adjustment of the breathability of the film or layer made from the composition itself.

The thermoplastic hydrophilic polymeric compositions of the present invention usually comprise the selected compatible plasticiser, or blend of plasticisers, in an amount substantially higher if compared to known thermoplastic hydrophilic polymeric compositions for liquid impermeable, moisture vapour permeable films or layer, such as e.g. those disclosed in our patent applications WO 99/64077 or WO 99/64505.

Preferably the thermoplastic polymeric hydrophilic composition of the present invention comprises from 5% to 95%, preferably from 10% to 70%, more preferably from 30% to 60%, by weight of the thermoplastic polymeric hydrophilic composition, of the selected thermoplastic hydrophilic polymer or mixture of selected thermoplastic hydrophilic polymers, and from 5% to 95%, preferably from 30% to 90%, more preferably from 40% to 70%, by weight of the thermoplastic hydrophilic composition, of the selected suitable compatible plasticiser or blend of selected plasticisers.

The thermoplastic hydrophilic polymeric compositions according to the present invention can also comprise further thermoplastic hydrophilic polymer or polymers, and also further plasticiser or plasticisers, besides those selected according to the present invention as described above. For example further hydrophilic polymer or polymers and plasticiser or plasticisers can be selected among those disclosed in our patent applications WO 99/64077 or WO 99/64505. Preferably, these further components should not be included in an amount higher than 50% by weight of the respective polymer or plasticiser fraction in the thermoplastic composition.

The thermoplastic hydrophilic polymeric compositions of the present invention may in addition comprise additional optional components to further improve the processibility of the compositions and also the mechanical characteristics as well as other characteristics as resistance to ageing by light and oxygen, visual appearance etc., of the films or layers formed from such thermoplastic hydrophilic polymeric compositions.

Further components which can be included in the thermoplastic hydrophilic polymeric compositions of the present invention are e.g. materials in particulate or powder form which can provide a further desired effect, such as for example any known material capable of providing odour control, e.g. zeolites, or any known active agent release material, or known fluid absorbent materials, and so on, said materials as already defined herein. Materials in particulate or powder form can be suitably selected in a desired average particle size such that they do not create discontinuities in e.g. a continuous film or layer formed from the thermoplastic hydrophilic polymeric composition of the present invention.

A thermoplastic hydrophilic polymeric composition according to the present invention can be manufactured with any known process that will typically comprise the steps of providing at least the selected thermoplastic hydrophilic polymer or mixture of polymers and the selected suitable compatible plasticiser or blend of plasticisers, and optionally any further additional components as explained above, such as for example a plasticiser or blend of plasticisers, heating the components and compounding them, e.g. with a known suitable mixer to form the thermoplastic hydrophilic polymeric composition in the molten state for subsequent process steps.

Alternatively, solvent or emulsion systems can be created and used to process the thermoplastic hydrophilic polymeric compositions of the present invention, either as intermediate or final step in making moisture vapour permeable, liquid impermeable structures from said compositions, and articles comprising said structures.

A process for making a layer or film from a thermoplastic polymeric hydrophilic composition according to the present invention typically comprises the steps of providing said composition, heating it to make it flowable, and forming said composition in the molten, semi-molten, or plastic state onto a substrate in a layer or film having the desired thickness, e.g. with a film extrusion process, or with a hot melt coating process, depending on the viscosity achieved for the composition at the process conditions, as explained above. While in principle said substrate can be simply a formation substrate, onto which the thermoplastic hydrophilic polymeric composition is formed in order to make a film or layer of the desired thickness which is subsequently separated from said substrate and used as such, in a preferred embodiment of the present invention a moisture vapour permeable, water impervious composite structure can be formed which comprises the thermoplastic hydrophilic polymeric composition and a suitable substrate onto which said thermoplastic composition is laid, wherein the substrate is also preferably moisture vapour permeable. The preferred tackiness imparted to the thermoplastic hydrophilic polymeric composition of the present invention by the disclosed selection of the thermoplastic hydrophilic polymer or polymers, and of the suitable compatible plasticiser or plasticisers in fact typically provides for an increased adhesion of the film or layer in the molten, semi-molten, or plastic state to the substrate, for example a fibrous substrate such as a nonwoven layer comprising hydrophobic synthetic fibres, while at the same time increasing the processability of the composition, and also keeping a high breathability of the film or layer, and hence preferably of the whole layered structure.

This in turn provides a better integrity of the resulting composite structure, which is therefore more resistant to e.g. delamination in use, also with very thin layers of the thermoplastic hydrophilic polymeric composition, wherein said improved adhesive properties of the composition and said better resistance of the resulting composite structure are combined with a very limited, or no detrimental effect at all on the water vapour transmission capability of the layer formed from the thermoplastic hydrophilic polymeric composition of the present invention, for example if compared to a layer of the same thickness formed from a similar composition, not comprising the selected compatible plasticiser or blend of plasticisers of the present invention. Particularly preferred plasticisers according to the present invention can also increase the water vapour transmission rate of a layer formed from the thermoplastic hydrophilic polymeric composition of the present invention, when compared to a layer of the same thickness formed from a similar composition, not comprising the hydrophilic tackifying resin or blend of hydrophilic tackifying resins of the present invention.

Other known processes can be used for making moisture vapour permeable, liquid impermeable structures, not limited to films and layers, from the thermoplastic hydrophilic polymeric compositions of the present invention, and articles comprising said structures.

A class of such methods is generally described as "moulding" where the material is often shaped via use of male or female moulds or combinations of moulds. Depending on the technique, certain processing temperature and pressure (or vacuum) conditions may be preferred for production of a given structure or article. Such known moulding methods include, but are not limited to: dip moulding, blow moulding, injection moulding, compression moulding, thermoforming, vacuum thermoforming, extrusion moulding, rotational moulding, slush moulding, etc.

Other known methods for processing the thermoplastic hydrophilic polymeric compositions of the present invention also include: film and sheet casting; blown film techniques; an additional tentering process step; an additional calendering step; an additional quenching step; an additional heat treatment step; etc. The nature of the specific production conditions or type or order of process steps will vary depending on the chosen making technique, environmental condition, material format, etc. For example, a process step may need to be included to remove: (i) solvent if a solvent-based format of the raw material form of the thermoplastic hydrophilic polymeric composition is chosen; (ii) water if an emulsion-based format of the raw material form of the thermoplastic hydrophilic polymeric composition is chosen; or, (iii) heat if a hot melt format of the raw material form of the thermoplastic hydrophilic polymeric composition is chosen.

A film or sheet can be produced with two or more layers where at least one of the layers comprises the thermoplastic hydrophilic polymeric composition of this invention. This can be accomplished by a variety of known means, including but not limited to: co-extrusion, extrusion coating, etc.

While it may be at times preferable that the entire structure or article be comprised solely of the thermoplastic hydrophilic polymeric composition of the present invention, the structure or the article can be a composite with one or more other materials. The composite, for example, can involve two or more components of the specific thermoplastic hydrophilic polymeric composition of the present invention or different specific thermoplastic hydrophilic polymeric compositions of the present invention.

Alternatively, the composite can involve at least one component of the thermoplastic hydrophilic polymeric composition in combination with one or more other materials. Such materials include, but are not limited to: fibres, fibrous batts, non-wovens, wovens, papers, metal foils, micro-porous or porous membranes, films such as polymeric films, inorganic structures such as compressed gypsum sheets, perforated or apertured films and papers, macroscopically expanded films, cloth, substantially rigid fibre-based materials such as lumber, etc.

Said other components may be non-absorbent, absorbent, liquid-containing, etc.

The thermoplastic hydrophilic polymeric compositions of the present invention can also be manufactured as a foam, including closed cell foams, with known means, for example to form cellular foam structures.

Another useful technique is the process of spray coating. The thermoplastic hydrophilic polymeric composition of this invention lends itself to a heated spraying technique whereas upon heating the viscosity is sufficiently lowered to allow spray coating or sputtering. Such thermoplastic hydrophilic polymeric composition spray coating can occur with the aid of a mould, either male or female, to build surfaces or walls of the article. Afterward, the article and mould (or mould parts) are separated from each other. Alternately, the spray coating method can employ different starting raw material formats of the polymer composition such as a solvent-based approach or an emulsion.

For a composite article comprising the thermoplastic hydrophilic polymeric composition of the present invention, and employing the spray coating approach, the other material may provide sufficient three dimensional structure by itself such that the other material acts as the mould, after which it is sufficiently coated the composite article is complete, avoiding the before-mentioned separation of article from mould.

In an embodiment of the present invention a moisture vapour permeable, liquid impervious composite layered structure can be provided wherein the contribution of the layer formed from the thermoplastic hydrophilic polymeric composition of the present invention to the overall performance of the composite material can only reside in the provision of a breathable liquid barrier and hence could be advantageously provided as thinly as possible. The remaining performance physical criterion is then preferably provided by the provided substrate, that therefore preferably acts also as a support layer.

The substrate, or support layer may be any useful layer which is preferably also moisture vapour permeable, preferably having a moisture vapour permeability of at least 100 g/m² 24h, more preferably at least 300 g/m² 24h, and most preferably at least 500 g/m² 24h.

Suitable substrates for use herein as support layers include two dimensional, planar micro and macro-porous films; macroscopically expanded films; formed apertured films; nonwoven and woven layers. According to the present invention the apertures in said layer may be of any configuration, but are preferably spherical or oblong and may also be of varying dimensions. The apertures preferably are evenly distributed across the entire surface of the layer, however layers having only certain regions of the surface having apertures are also envisioned.

Suitable two dimensional porous planar layers may be made of any material known in the art, but are preferably manufactured from commonly available polymeric materials. Suitable materials are for example Goretex^{™} or Sympatex^{™} type materials well known in the art for their application in so-called breathable clothing. Other suitable materials include XMP-1001 of Minnesota Mining and Manufacturing Company, St. Paul, Minnesota, USA and Exxaire XBF-101W, supplied by the Exxon Chemical Company. As used herein the term two dimensional planar layer refers to layers having a depth of less than 1 mm, preferably less than 0.5 mm, wherein the apertures have an average uniform diameter along their length and which do not protrude out of the plane of the layer. The apertured materials for use in the present invention may be produced using any of the methods known in the art such as described in EPO 293 482 and the references therein.

Suitable apertured formed films include films which have discrete apertures which extend beyond the horizontal plane of the surface of the layer thereby forming protuberances. The protuberances have an orifice located at its terminating end. Preferably said protuberances are of a funnel shape, similar to those described in US 3,929,135. The apertures located within the plane and the orifices located at the terminating end of protuberance themselves maybe circular or non circular provided the cross sectional dimension or area of the orifice at the termination of the protuberance is smaller than the cross sectional dimension or area of the aperture located within the surface of the layer. Preferably said apertured preformed films are unidirectional such that they have at least substantially, if not complete one directional fluid transport.

Suitable macroscopically expanded films for use herein include films as described in for example in US 4,637,819 and US 4,591,523.

Preferred support layers for use herein include woven and nonwoven layers, most preferably hydrophobic fibrous layers such as hydrophobic nonwovens.

The composite layered structures of this preferred embodiment of the present invention are particularly advantageous as they allow the possibility of providing a composite wherein the thermoplastic composition may be formed onto the support substrate as a layer with the desired thickness. By e.g. suitably tailoring the viscosity of the thermoplastic hydrophilic polymeric composition at the process conditions as explained above; typical coating conditions and apparatuses known in the art for the direct coating of low viscosities hot melts can be readily utilised in order to provide the thermoplastic hydrophilic polymeric composition at the desired thickness onto the substrate. Alternatively, other known processes such as film extrusion can be used in case of thermoplastic hydrophilic polymeric compositions according to the present invention having a higher viscosity at the process conditions.

A possible method for forming a composite laminate by coating the thermoplastic composition onto a substrate acting as a support layer is described in PCT application WO 96/25902.

The thermoplastic hydrophilic polymeric compositions for making moisture vapour permeable, liquid impermeable structures according to the present invention have been so far described as being provided with the desired adhesiveness or tackiness typically in the molten, semi-molten, or plastic state. This is desired in a preferred embodiment of the present invention in order to form e.g. more stable moisture vapour permeable, liquid impermeable layered composite structures with the thermoplastic hydrophilic polymeric composition directly formed as a layer or film onto a suitable substrate, for example substrates having a very low polar character such as preferred nonwovens comprising hydrophobic fibres, wherein said increased adhesiveness to a substrate is not achieved to the detriment of the moisture vapour permeability of the resulting layer or film. More in general, the thermoplastic hydrophilic polymeric compositions of the present invention can be formulated as hot-melt adhesives, which can find use as e.g. construction adhesives in e.g. disposable absorbent articles, and in general in all those applications where a moisture vapour permeable, liquid impermeable adhesive composition is needed.

However, the thermoplastic hydrophilic polymeric compositions of the present invention can also be formulated in order to have permanent or semi-permanent pressure sensitive adhesive character, i.e. such that the thermoplastic hydrophilic polymeric composition remains tacky in the solid sate, typically at room temperature, for a variable time as explained hereinabove. They can be therefore particularly useful also in all those applications where a continuous, moisture vapour permeable, liquid impermeable adhesive layer is needed, e.g. as construction adhesives in disposable absorbent articles, or alternatively in adhesives for securing an article wherever it is needed, for example a disposable absorbent article to garments or to the body, in breathable adhesive tapes, etc.

The thermoplastic hydrophilic polymeric compositions of the present invention and the moisture vapour permeable, liquid impervious structures, e.g. layers or films used as such, or composites such as laminated structures formed therefrom, find utility in a number of applications wherein liquid imperviousness and moisture vapour permeability are desirable.

Said structures can be typically disposable, e.g. laminated structures with a nonwoven as a substrate, or alternatively durable or semi-durable, such as for example laminated structures comprising a textile or a fabric as a substrate or support.

In particular the present invention can be effectively utilised within personal care products, such as absorbent articles, wound care articles, or cosmetics. Non limiting examples are absorbent articles such as diapers, sanitary napkins, panty liners, incontinence products and breast pads; wound and burn dressings and bandages, warming or cooling pads for medical use; patches, bandages or wraps, e.g. for medical or cosmetic treatment, which may contain and deliver active substances; perspiration pads such as underarm-, wrist- and head perspiration pads, collar inserts, shoe inserts, hat bands; cosmetics such as make up, face masks, lipsticks, or hair gels, in order to create on the skin or on the hair a breathable film, nail polish, etc.

Other articles comprising the thermoplastic hydrophilic polymeric compositions of the present invention comprise protective articles for the body, or for body parts. Non limiting examples comprise protective clothing such as working or surgical gowns and the like; hand coverings such as gloves, finger cots, mitts, mittens; foot or leg coverings such as socks, hose, pantyhose, shoes, slippers; head coverings such as hats, caps; prophylactic and contraceptive mechanical articles such as condoms; face coverings such as face masks, nose covers, ear covers or mitts; sport and fitness wearing articles, wind cheaters, sleeping bags; body support items such as male organ "athletic" supporters, brassieres; clothing for use as underwear, protective sleeves, or as a part of or wholly incorporated into protective pads. Other example articles and applications include but are not limited to: flexible or drapable clothing articles for humans such as the non-limiting examples of shirts, pants, undergarments, bibs, smocks, coats, scarves, body wraps, stockings, leggings, skirts, dresses, etc.; other flexible or drapable clothing or protecting sheets for various tasks and occupations including medical professions, agricultural jobs, mechanical assembly and repair, emergency public services, the military, athletic endeavours, cleaning positions; protective garments for animals.

A further category of articles comprising the thermoplastic hydrophilic polymeric compositions of the present invention comprises articles for protecting objects. Preferred protecting articles comprise protecting bedding covers such as linen, mattress and pillow covers. Also protecting covers for cushions, comforter, duvets, upholstered portions of beds, such as headboards, or of sofas or armchairs are comprised. Other non limiting examples comprise protective articles such as dust covers for electronic/electrical products (e.g. computer keyboards, hard drives, video recorders, etc.), headrest covers for seats in vehicles, e.g. aeroplanes/trains, shrink wraps, one use table covers, etc. Articles for packaging such as for food products such as fresh produce and baked goods (bread, rolls, cakes), e.g. bags for food storage in the refrigerator, or also packaging films for microwave oven, or packages for hot "take away" foods, e.g. pizza. Further examples comprise articles for agriculture and horticulture such as, as non-limiting examples, an individual article (container, three dimensional "bag") which is placed to partially or totally enclose an individual or specific group of plants. Protective furniture coverings such as protective covers for upholstered chairs and sofas, etc. are also comprised. Other alternative protecting articles comprise construction roofing materials and house wrapping, ski, windsurf and bike/motor bike overalls, backings for carpets and wallpapers, camping tents, protecting sheets for various items (e.g. cars, tennis courts, sport grounds, etc.), sheets for gardens/greenhouses protection, tents for closing/protecting tennis courts, sport grounds, items for protection of plants from low temperatures, etc.

Alternative applications in which the thermoplastic hydrophilic polymeric compositions of the present invention are applied via spraying/brushing/roll coating, typically in the form of a solvent or emulsion based composition and at room temperature, comprise protective, possibly peelable coatings for hard surfaces such as stone, concrete, wood (e.g. furniture), for coating/water proofing of shoes/leather articles or textiles, protective coatings for cars (e.g. during transport by ship), protective coatings for cars, boats etc. during long periods of non use. The thermoplastic hydrophilic polymeric compositions of the present invention can also be comprised in breathable paints.

More in general, whenever possible in the many different applications mentioned above, the thermoplastic hydrophilic polymeric compositions of the present invention can be either provided as an already formed layer or structure, or alternatively also applied in liquid form, e.g. sprayed or brushed, and also possibly comprising active agents, for example to the body, e.g. in a cosmetic, medical, or protective composition, or to plants.

In general all articles comprising the thermoplastic hydrophilic polymeric compositions of the present invention can be generally flexible or rigid.

All the above articles can be made of or comprise the thermoplastic hydrophilic polymeric compositions described in the already mentioned applications WO 99/64077, and WO 99/64505.

Preferably the moisture vapour permeable, liquid impervious structures, e.g. layers and composites, formed from the thermoplastic compositions of the present invention have an overall moisture vapour transfer rate of at least 300 g/m² 24h, and preferably at least 500 g/m² 24h.

A moisture vapour permeable, liquid impervious composite structure formed by forming the thermoplastic polymeric hydrophilic composition of the present invention onto a suitable substrate finds particular utility as the backsheet for disposable absorbent articles, especially sanitary napkins and panty liners, but also diapers, incontinence products and breast pads. Such articles will typically comprise components known to the skilled person such as a liquid pervious topsheet, an absorbent core and a backsheet and may optionally also comprise other components such as fastening means, wings, and the like.

### Example 1.

The breathability, in terms of water vapour transmission rate (WVTR) values, and the tackiness, in terms of loop tack values, of samples made of the thermoplastic hydrophilic polymeric compositions of the present invention, compared to comparative samples made of prior art compositions, are shown in the examples below.

### Sample preparation.

The samples are prepared as films cast from a solution of the thermoplastic hydrophilic polymeric composition into a specific solvent, onto a glass plate 30 cm x 20 cm, using a K Hand Coater No. 150 available from RK Print Instruments Ltd.

Raw materials used in the compositions are as follows.

A polyether-amide block copolymer available from Atofina (France) and commercialised under the trade name Pebax 2533 SN01 as the thermoplastic hydrophilic polymer according to the present invention.

A N-(2-hydroxypropyl) benzene sulphonamide available from Unitex Chemical Corporation under the trade name of Uniplex 225 as the plasticiser according to the present invention.

Triethyl Citrate available from Aldrich Co. as a prior art plasticiser.

A tackifying resin available from Hercules Inc. and sold under the tradename Foral 85-E

Irganox 1010 available from Ciba-Geigy as an anti-oxidant agent.

The solution contains 10% by weight of the thermoplastic hydrophilic polymeric composition, and after complete evaporation of the solvent the film obtained has the desired thickness as indicated below. Different solvents can be used according to the thermoplastic hydrophilic polymer contained in the thermoplastic hydrophilic polymeric composition, as can be readily determined by the skilled man, and namely a 50:50 mixture of toluene/isopropanol for Pebax 2533 SN01.

Components and compositions in weight percent used for the samples are shown in Table I below.

| Sample | 1 | 2 | 3 | 4 | 5 |
|---|---|---|---|---|---|
| | reference | reference | reference | | |
| Pebax 2533 SN01 | 100% | 50% | 30% | 50% | 30% |
| Foral 85-E | | 50% | | | |
| Uniplex 225 | | | | 50% | 70% |
| Triethyl Citrate | | | 70% | | |

Breathability in terms of moisture vapour transmission rate (WVTR), and tackiness in term loop tack after one hour and after twenty four hours from the formation of the sample are shown in Table II below. Thickness of the sample is about 25 µm, unless otherwise indicated in the table.

| Sample | WVTR | Loop Tack 1 h | Loop Tack 24 h |
|---|---|---|---|
| | (g/m² 24h) | (N/cm) | (N/cm) |
| 1 (reference) | 1535 (20µm) | 0 | 0 |
| 2 (reference) | 390 (20µm) | 0.79 | 0.79 |
| 3 (reference) | 2319 | 0.06 | 0.06 |
| 4 | 1910 (20µm) | 0.45 | 0.04 |
| 5 | 1968 | 1.07 | 0.09 |

As shown in Table II, the film formed from the thermoplastic hydrophilic polymeric compositions according to the present invention (Samples 4 and 5) and comprising only the polymer and the plasticiser, show a tackiness at 1 hour which is at least comparable (Sample 4) to that of Reference Sample 2, and even higher than that (Sample 5, having a preferred composition with a higher content of plasticiser). On the other hand, breathability of the Samples according to the present invention is much higher than that of Reference Sample 2, and also of Reference Sample 1, comprising only the pure polymer, and rather close to that of Reference Sample 3, which comprises the same polymer and a preferred plasticiser according to our patent application WO 99/64505, and provides a very good breathability, but substantially no tackiness.

Samples 4 and 5 show the semi-permanent tackiness, which almost completely disappears after 24 hours from the formation of the sample.

### Example 2.

Different moisture vapour permeable, liquid impervious composite layered structures according to the present invention are described as Example 2.

A polyether-amide block copolymer available from Atofina (France) and commercialised under the trade name Pebax 2533 SN01 is compounded with Citroflex 2 (plasticiser) available from Reilly Chemical, Ketjenflex 8 (plasticiser) available from Akzo Nobel, Irganox 1010 and Irganox PS 800 (anti oxidant agents) available from Ciba-Geigy. A zeolite in powder form available from Silkem d.o.o. (Slovenia) under the trade name ZP-4A is also added to the composition and compounded with the other components.

The final formulation in percent by weight has the following composition:

| | |
|---|---|
| 50% | Pebax 2533 SN01 |
| 24.35% | Citroflex 2 |
| 24.35% | Ketjenflex 8 |
| 0.15% | Irganox PS 800 |
| 0.15% | Irganox 1010 |
| 1% | ZP-4A |

The thermoplastic composition is directly coated onto a fibrous substrate in a continuous film having a basis weight of 20 g/m² by a hot melt coating process. The fibrous substrate is an SMS (Spunbonded-Meltblown-Spunbonded structure) hydrophobic 100% polypropylene nonwoven with a basis weight of 17 g/m² (support layer), available form Corovin - BBA Nonwovens Group (Germany) under the code G17A10. The composite has a WVTR of 1907 g/m² 24h.

After formation of the laminated structure, different perfume compositions in particle form together with talcum powder are directly applied onto the surface of the thermoplastic composition, and adhered thereto taking advantage of the tackiness of the thermoplastic hydrophilic polymeric composition of the present invention. Four different samples are prepared comprising talcum powder and two conventional types of starch encapsulated perfumes (50% perfume : 50% starch, and 75% perfume : 25% starch, by weight) according to the table below. Starch encapsulated perfumes with suitable fragrances are known and readily available on the market.

| | 1 | 2 | 3 | 4 |
|---|---|---|---|---|
| 50:50 | 0.15 g/m² | 0.015 g/m² | | |
| 75:25 | | | 0.11 g/m² | 0.011 g/m² |
| talcum powder | 3.5 g/m² | 3.8 g/m² | 3.5 g/m² | 3.8 g/m² |

The structures corresponding to samples 1 and 3, comprising the higher amounts of perfume particles can be used to produce mattress covers, while the structures corresponding to samples 2 and 4, comprising the lower amounts of perfume particles, can find use in the production of pillow covers.

### Test methods.

According to the present invention the complex viscosity η* is measured using a Rheometer RDA-II available from Rheometrics Co. Moisture vapour permeability is measured as Water Vapour Transmission Rate (WVTR) at 25°C and 55% relative humidity according to the modified ASTM E-96 "Upright Cup" method. The only modification to the standard ASTM E-96 "Upright Cup" method consists in a change in the height of the air gap between the sample and the water surface in the cup, which height is 3 mm ± 0.5 mm, instead of 19 mm ± 2.5 mm, as specified in the standard test method. The loop tack is measured according to the FINAT Test Method No. 9 (FTM 9).

## Claims

1. A thermoplastic hydrophilic polymeric composition comprising:
a thermoplastic hydrophilic polymer selected from the group consisting of polyamides and co-polyanaides, polyesters and copolyesters and their sulfonate derivatives, polyether-amides and polyether-amide block copolymers, polyester-amides and polyester-amide block copolymers, polyether-ester-amides and polyether-ester-amide block copolymers, polyether-ester block copolymers, and mixtures thereof said thermoplastic hydrophilic polymer having hard and soft segments in the molecular chain, and wherein said thermoplastic hydrophilic polymer shows, at least in the solid state, and typically at room temperature, a multi-phase morphology with hard and soft domains, and
at least a suitable plasticiser which preferentially associates with said hard segments of said thermoplastic hydrophilic polymer; and which is capable of preferentially softening said hard domains, and wherein:
when said hard segments of said thermoplastic hydrophilic polymer have an amidic structure, said plasticiser is selected from the group consisting of sulphonamides, lactames, and polyamides with a number average molecular weight Mₙ not higher than 25,000 Daltons; and
when said hard segments of said thermoplastic hydrophilic polymer have a polyester structure, said plasticiser is selected from the group consisting of sulphonamides, sulfones, and polyesters with a number average molecular weight Mₙ not higher than 25,000 Daltons;
wherein said thermoplastic hydrophilic polymeric composition does not comprise a tackifying resin and has a tackiness at 1 h of at least 0.3N/cm, preferably of at least 0.4 N/cm, more preferably of at least 0.6 N/cm, most preferably of at least 1.0 N/cm, said tackiness evaluated according to the FINAT Test Method No. 9 (FTM 9) referred to herein.

2. A thermoplastic hydrophilic polymeric composition according to claim 1, wherein said thermoplastic hydrophilic polymer is selected from the group consisting of copolyesters, polyester-amide block copolymers, polyether block copolymers, polyether-amide block copolymers, polyether-ester-amide block copolymers and polyether-ester block copolymers, and mixtures thereof.

3. A thermoplastic hydrophilic polymeric composition according to claim 1 or claim 2, wherein said thermoplastic hydrophilic polymeric composition comprises:
from 5% to 95%, preferably from 10% to 70%, more preferably from 30% to 60%, by weight of said thermoplastic polymeric hydrophilic composition, of the selected thermoplastic hydrophilic polymer or of a mixture of selected thermoplastic hydrophilic polymers, and
from 5% to 95%, preferably from 30% to 90%, more preferably from 40% to 70%, by weight of said thermoplastic hydrophilic composition, of the selected suitable compatible plasticiser or blend of plasticisers.

4. A thermoplastic hydrophilic polymeric composition according to any preceding claim, wherein said thermoplastic hydrophilic polymeric composition has a tackiness at 1 h of at least 0.4 N/cm, more preferably of at least 0.6 N/cm, most preferably of at least 1.0 N/cm.

5. A thermoplastic hydrophilic polymeric composition according to any preceding claim, wherein said thermoplastic hydrophilic polymeric composition has a tackiness at 24 h which is less than 30%, preferably less than 10%, of the tackiness at 1 h, said tackiness at 24 h being preferably less than 0.1 N/cm, more preferably less than 0.05 N/cm.

6. A moisture vapour permeable continuous layer formed from the thermoplastic hydrophilic polymeric composition according to any preceding claim, wherein said layer is liquid impervious and has a water vapour transmission rate (WVTR) of at least 300g/m² 24h, more preferably of at least 500g/m² 24h, even more preferably of at least 600g/m² 24h, most preferably of at least 1000g/m² 24h, with a thickness of said layer of at least 20 µm, said water vapour transmission rate measured according to the modified ASTM E-96 "Upright Cup" Method referred to herein.

7. A moisture vapour permeable continuous layer according to claim 6, wherein said layer comprises a material selected from odour control materials, moisture absorbent materials, active agent release materials, inert materials, or mixtures thereof

8. A moisture vapour permeable continuous layer according to claim 7, wherein said material is a perfume in particle form directly adhered thereto.

9. A moisture vapour permeable, liquid impervious layered structure comprising the layer of claims 6 to 8 bonded to a substrate, said substrate being moisture vapour permeable.

10. A disposable bedding cover comprising a moisture vapour permeable, liquid impervious layer or layered structure according to claims 6 to 9, wherein said bedding cover is a mattress or a pillow cover.

## Patentansprüche

1. Thermoplastische hydrophile Polymerzusammensetzung, umfassend:
ein thermoplastisches hydrophiles Polymer, ausgewählt aus der Gruppe, bestehend aus Polyamiden und Copolyamiden, Polyestern und Copolyestern und deren Sulfonatderivaten, Polyetheramiden und Polyetheramid-Blockcopolymeren, Polyesteramiden und Polyesteramid-Blockcopolymeren, Polyetheresteramiden und Polyetheresteramid-Blockcopolymeren, Polyetherester-Blockcopolymeren und Mischungen davon, wobei das thermoplastische hydrophile Polymer harte und weiche Segmente in der Molekülkette aufweist und wobei das thermoplastische hydrophile Polymer, zumindest im festen Zustand und in der Regel bei Raumtemperatur, eine mehrphasige Morphologie mit harten und weichen Domänen zeigt, und
mindestens einen geeigneten Weichmacher, der sich vorzugsweise mit den harten Segmenten des thermoplastischen hydrophilen Polymers verbindet; und der in der Lage ist, vorzugsweise die harten Domänen weich zu machen, und wobei:
wenn die harten Segmente des thermoplastischen hydrophilen Polymers eine Amid-Struktur aufweisen, der Weichmacher ausgewählt ist aus der Gruppe, bestehend aus Sulfonamiden, Lactamen, Polyamiden mit einem Molekulargewicht-Zahlenmittel Mₙ von nicht mehr als 4,15E-20 g (25.000 Dalton); und
wenn die harten Segmente des thermoplastischen hydrophilen Polymers eine Polyester-Struktur aufweisen, der Weichmacher ausgewählt ist aus der Gruppe, bestehend aus Sulfonamiden, Sulfonen, und Polyestern mit einem Molekulargewicht-Zahlenmittel Mₙ von nicht mehr als 4,15E-20 g (25.000 Dalton);
wobei die thermoplastische hydrophile Polymerzusammensetzung kein klebrig machendes Harz umfasst und eine Klebrigkeit bei 1 h von mindestens 0,3 N/cm, vorzugsweise von mindestens 0,4 N/cm, mehr bevorzugt von mindestens 0,6 N/cm, am meisten bevorzugt von mindestens 1,0 N/cm aufweist, wobei die Klebrigkeit gemäß dem FINAT-Testverfahren Nr. 9 (FTM 9), das hierin genannt wird, bewertet wird.

2. Thermoplastische hydrophile Polymerzusammensetzung nach Anspruch 1, wobei das thermoplastische hydrophile Polymer ausgewählt ist aus der Gruppe, bestehend aus Copolyestern, Polyesteramid-Blockcopolymeren, Polyether-Blockcopolymeren, Polyetheramid-Blockcopolymeren, Polyetheresteramid-Blockcopolymeren und Polyetherester-Blockcopolymeren und Mischungen davon.

3. Thermoplastische hydrophile Polymerzusammensetzung nach Anspruch 1 oder Anspruch 2, wobei die thermoplastische hydrophile Polymerzusammensetzung Folgendes umfasst:
von 5 Gew.-% bis 95 Gew.-%, vorzugsweise von 10 Gew.-% bis 70 Gew.-%, mehr bevorzugt von 30 Gew.-% bis 60 Gew.-% der thermoplastischen polymeren hydrophilen Zusammensetzung das ausgewählte thermoplastische hydrophile Polymer oder eine Mischung aus ausgewählten thermoplastischen hydrophilen Polymeren, und
von 5 Gew.-% bis 95 Gew.-%, vorzugsweise von 30 Gew.-% bis 90 Gew.-%, mehr bevorzugt von 40 Gew.-% bis 70 Gew.-% der thermoplastischen hydrophilen Zusammensetzung den ausgewählten geeigneten kompatiblen Weichmacher oder eine Mischung aus den Weichmachern.

4. Thermoplastische hydrophile Polymerzusammensetzung nach einem der vorstehenden Ansprüche, wobei die thermoplastische hydrophile Polymerzusammensetzung eine Klebrigkeit bei 1 h von mindestens 0,4 N/cm, mehr bevorzugt von mindestens 0,6 N/cm, am meisten bevorzugt von mindestens 1,0 N/cm aufweist.

5. Thermoplastische hydrophile Polymerzusammensetzung nach einem der vorstehenden Ansprüche, wobei die thermoplastische hydrophile Polymerzusammensetzung eine Klebrigkeit bei 24 h aufweist, die weniger als 30 %, vorzugsweise weniger als 10 % der Klebrigkeit bei 1 h beträgt, wobei die Klebrigkeit bei 24 h vorzugsweise weniger als 0,1 N/cm, mehr bevorzugt weniger als 0,05 N/cm beträgt.

6. Wasserdampfdurchlässige kontinuierliche Schicht, die aus der thermoplastischen hydrophilen Polymerzusammensetzung nach einem der vorstehenden Ansprüche gebildet ist, wobei die Schicht flüssigkeitsundurchlässig ist und eine Wasserdampfdurchlässigkeitsrate (WVTR) von mindestens 300 g/m²•24h, mehr bevorzugt von mindestens 500 g/m²•24h, noch mehr bevorzugt von mindestens 600 g/m²•24h, am meisten bevorzugt von mindestens 1000 g/m²•24h bei einer Dicke der Schicht von mindestens 20 µm aufweist, wobei die Wasserdampfdurchlässigkeitsrate gemäß dem modifizierten ASTM E-96-Verfahren "Upright Cup", das hierin genannt wird, gemessen wird.

7. Wasserdampfdurchlässige kontinuierliche Schicht nach Anspruch 6, wobei die Schicht ein Material umfasst, das aus Geruchsbekämpfungsmaterialien, feuchtigkeitsabsorbierenden Materialien, Wirkstoff freisetzenden Materialien, inerten Materialien oder Mischungen davon ausgewählt ist.

8. Wasserdampfdurchlässige kontinuierliche Schicht nach Anspruch 7, wobei das Material ein Duftstoff in Teilchenform ist, der direkt daran angelagert ist.

9. Wasserdampfdurchlässige, flüssigkeitsundurchlässige Schichtstruktur, umfassend die Schicht nach Ansprüchen 6 bis 8, die an ein Substrat gebunden ist, wobei das Substrat wasserdampfdurchlässig ist.

10. Einweg-Bettabdeckung, die eine wasserdampfdurchlässige, flüssigkeitsundurchlässige Schicht oder Schichtstruktur nach Ansprüchen 6 bis 9 umfasst, wobei die Bettabdeckung eine Matratzen- oder eine Kissenabdeckung ist.

## Revendications

1. Composition polymère hydrophile thermoplastique comprenant :
un polymère hydrophile thermoplastique choisi dans le groupe constitué de polyamides et copolyamides, polyesters et copolyesters et leurs dérivés sulfonate, polyéther-amides et copolymères séquencés polyéther-amide, polyester-amides et copolymères séquencés polyester-amide, polyéther-ester-amides et copolymères séquencés polyéther-ester-amide, copolymères séquencés polyéther-ester, et leurs mélanges, ledit polymère hydrophile thermoplastique ayant des segments durs et mous dans la chaîne moléculaire, et dans laquelle ledit polymère hydrophile thermoplastique montre, au moins à l'état solide, et typiquement à la température ambiante, une morphologie polyphasique avec des domaines durs et mous, et
au moins un plastifiant approprié qui s'associe préférentiellement avec lesdits segments durs dudit polymère hydrophile thermoplastique ; et qui est susceptible de ramollir préférentiellement lesdits domaines durs, et dans laquelle :
lorsque lesdits segments durs dudit polymère hydrophile thermoplastique ont une structure amide, ledit plastifiant est choisi dans le groupe constitué de sulfonamides, lactames, polyamides avec une masse moléculaire moyenne en nombre Mₙ qui n'est pas supérieure à 25 000 daltons ; et
lorsque lesdits segments durs dudit polymère hydrophile thermoplastique ont une structure polyester, ledit plastifiant est choisi dans le groupe constitué de sulfonamides, sulfones, et polyesters avec une masse moléculaire moyenne en nombre Mₙ qui n'est pas supérieure à 25 000 daltons ;
où ladite composition polymère hydrophile thermoplastique ne comprend pas de résine conférant de l'adhésivité et a une adhésivité à 1 h d'au moins 0,3 N/cm, de préférence d'au moins 0,4 N/cm, plus préférablement d'au moins 0,6 N/cm, le plus préférablement d'au moins 1,0 N/cm, ladite adhésivité étant évaluée selon le procédé de test FINAT Test Method No. 9 (FTM 9) donné en référence ici.

2. Composition polymère hydrophile thermoplastique selon la revendication 1, dans laquelle ledit polymère hydrophile thermoplastique est choisi dans le groupe constitué de copolyesters, copolymères séquencés polyester-amide, copolymères séquencés polyéther, copolymères séquencés polyéther-amide, copolymères séquencés polyéther-ester-amide et copolymères séquencés polyéther-ester, et leurs mélanges.

3. Composition polymère hydrophile thermoplastique selon la revendication 1 ou la revendication 2, où ladite composition polymère hydrophile thermoplastique comprend :
de 5 % à 95 %, de préférence de 10 % à 70 %, plus préférablement de 30 % à 60 %, en poids de ladite composition hydrophile polymère thermoplastique, du polymère hydrophile thermoplastique choisi ou d'un mélange de polymères hydrophiles thermoplastiques choisis, et
de 5 % à 95 %, de préférence de 30 % à 90 %, plus préférablement de 40 % à 70 %, en poids de ladite composition hydrophile thermoplastique, du plastifiant ou mélange de plastifiants compatible approprié choisi.

4. Composition polymère hydrophile thermoplastique selon l'une quelconque des revendications précédentes, où ladite composition polymère hydrophile thermoplastique a une adhésivité à 1 h d'au moins 0,4 N/cm, plus préférablement d'au moins 0,6 N/cm, le plus préférablement d'au moins 1,0 N/cm.

5. Composition polymère hydrophile thermoplastique selon l'une quelconque des revendications précédentes, où ladite composition polymère hydrophile thermoplastique a une adhésivité à 24 h qui est moins de 30 %, de préférence moins de 10 %, de l'adhésivité à 1 h, ladite adhésivité à 24 h étant de préférence moins de 0,1 N/cm, plus préférablement moins de 0,05 N/cm.

6. Couche continue perméable à la vapeur d'humidité formée à partir de la composition polymère hydrophile thermoplastique selon l'une quelconque des revendications précédentes, où ladite couche est imperméable aux liquides et a un taux de transmission de vapeur d'eau (TTVE) d'au moins 300 g/m²·24 h, plus préférablement d'au moins 500 g/m²•24h, encore plus préférablement d'au moins 600 g/m²·24 h, le plus préférablement d'au moins 1000 g/m²·24 h, avec une épaisseur de ladite couche d'au moins 20 µm, ledit taux de transmission de vapeur d'eau étant mesuré selon le procédé modifié ASTM E-96 à « godet dressé » donné en référence ici.

7. Couche continue perméable à la vapeur d'humidité selon la revendication 6, où ladite couche comprend un matériau choisi parmi les matériaux anti-odeur, matériaux absorbants d'humidité, matériaux de libération d'agent actif, matériaux inertes, ou leurs mélanges.

8. Couche continue perméable à la vapeur d'humidité selon la revendication 7, dans laquelle ledit matériau est un parfum sous forme de particule, directement adhéré à celui-ci.

9. Structure en couche imperméable aux liquides, perméable à la vapeur d'humidité comprenant la couche selon les revendications 6 à 8, liée à un substrat, ledit substrat étant perméable à la vapeur d'humidité.

10. Protection de literie jetable comprenant une couche ou structure en couche imperméable aux liquides, perméable à la vapeur d'humidité selon les revendications 6 à 9, où ladite protection de literie est une protection de matelas ou d'oreiller.
